# EUROPEAN PATENT SPECIFICATION

(11) **EP 1 717 992 B1**
(45) Date of publication and mention of the grant of the patent: **08.09.2010**
(21) Application number: 05009191.7
(22) Date of filing: 27.04.2005
(51) Int. Cl.: H04L 12/28, B64D 11/00

(54) **Passenger information system**
Informationssystem für Passagiere
Système d'information pour des passagers

(43) Date of publication of application: 02.11.2006
(73) Proprietor: Bombardier Transportation GmbH, 10785 Berlin (DE)
(72) Inventor: Hauspie, Patrick, 8972 Roesbrugge (BE)
(74) Representative: Cohausz & Florack

(56) References cited:
- US-A1- 2002 160 773
- US-A1- 2005 039 208
- PATENT ABSTRACTS OF JAPAN vol. 2002, no. 05, 3 May 2002 (2002-05-03) & JP 2002 033753 A (SUGA YOSHITOMO), 31 January 2002 (2002-01-31)

## Description

The invention relates to a passenger information system for a vehicle, in particular a rail vehicle, comprising a central information control arrangement, at least a first video output device and at least a first audio output device. The central information control arrangement provides first video information to the first video output device and first audio information to the first audio output device. The central information control arrangement synchronizes the first video information and the first audio information to provide a passenger of the vehicle with coherent audiovisual information. The first video output device is assigned to be used by a plurality of passengers to receive the first video information. The invention also relates to a corresponding method for providing information to a passenger of a vehicle.

Common passenger information systems (PIS) provide passengers of vehicles such as busses, trains or airplanes with primary information or secondary information. The primary information is intended for all passengers. It mainly deals with essential information concerning the vehicle or the trip, e.g. trip schedules, driver or crew announcements, delays, safety issues etc. The secondary information, in general, is only intended for passengers wanting to be provided with this kind of information. The main example is infotainment content.

In general, the primary and secondary information is provided to the passengers in an audiovisual manner. Primary information is mostly spread via internal or external loudspeakers and via displays (LED arrays, LCDs) both distributed evenly throughout the vehicle. In the context of secondary information it is also known, e.g. from airplane systems, to provide infotainment content to passengers via video monitors that display programs conceived to entertain and inform the passenger. In general, these video information systems comprise a headphone socket provided at or near the seat of each passenger to plug in a headphone, as it is known e.g. from US 2005/0039208 A1 further disclosing distribution of such audiovisual information to individually used devices such as PDAs etc.

This solution limits the number of connections to the number of equipped seats. Passengers who are standing up or sat on a non-equipped seat are deprived of using the infotainment services. In particular in commuter trains, passengers are constantly moving inside the sometimes crowded vehicle rendering the known passenger information system at least impractical and limited.

Furthermore, apart from the limited number of users, this solution results in a non negligible cost for cabling and integration that increases proportionally to the number of connections. Moreover the headphone sockets and associated control buttons are subject to acts of vandalism.

It is thus an object of the present invention to provide a passenger information system and a method for informing a passenger of a vehicle that, at least to some extent, overcomes the above disadvantages. It is a further object of the present invention to provide a passenger information system and a method for informing a passenger of a vehicle that allows passengers to easily access secondary information, such as infotainment, on demand.

The above objects are achieved, starting from a passenger information system according to the preamble of claim 1, by the features of the characterizing part of claim 1. They are also achieved, starting from a method for informing a passenger of a vehicle according to the preamble of claim 16, by the features of the characterizing part of claim 16.

The present invention is based on the technical teaching that easy on demand access to primary or secondary information is achieved when the first audio information is provided via a mobile first audio output device receiving the first audio information via an at least partially wireless first connection. This partially wireless connection allows for on demand distribution of information to a large, in some cases even virtually unlimited number of passengers without the necessity for these passengers to physically access hardware interfaces for their audio output device, such as plug-in sockets or the like.

Each passenger may carry his own wireless first audio output device, such as an audio receiver with a headphone, and access on demand the first audio information synchronized with the first video information output on the first video output device.

The wireless technology renders the cabling effort issue irrelevant and simplifies greatly the integration of the system into a vehicle. This simplification renders the system much more flexible and likely to be able to migrate in the future. Furthermore, with the wireless solution according to the invention, depending on the wireless technology used, the number of users may even be virtually unlimited. Passengers are able to move freely inside the vehicle while listening to the audio information provided to their audio output device. Thus, this solution is particularly suitable for application in commuter vehicles.

Furthermore, the system according to the invention has the additional advantage to be less subject and sensitive to vandalism. On the one hand, users are responsible for their own audio output device that they have bought or rented, for example. Furthermore, there may be no hardware interfaces that are easily accessible and highly sensitive to vandalism acts. For example, the transmitters for transmitting the audio information to the respective user audio output device may be located such that they are not or not easily accessible to the passengers.

According to a first aspect of the invention, there is provided a passenger information system for a vehicle, in particular a rail vehicle, comprising a central information control arrangement, at least a first video output device and at least a first audio output device. The central information control arrangement provides first video information to the first video output device and first audio information to the first audio output device. The central information control arrangement synchronizes the first video information and the first audio information to provide a passenger of the vehicle with coherent audiovisual information. The first video output device is assigned to be used by a plurality of passengers to receive the first video information. The first audio output device is a mobile device connected to the central information control arrangement via an at least partially wireless first connection.

The central information control arrangement may be of any suitable design. Preferably, a first transmitter unit connected to said central information control arrangement is provided transmitting the first audio information via first radio frequency signals and the audio output device comprises a first receiver receiving the first radio frequency (RF) signals.

In general, any known wireless data transmission technology may be used in the context of the invention. Preferably, two technological alternatives are chosen based on a trade-off between cost, performance, evolution possibilities and market implementation.

In the first preferred alternative, the audio output device comprises a custom analog RF receiver. This scenario uses a proprietary device designed specifically for the respective passenger information system. This technology has the advantage that it provides a low cost device within everyone's budget. Another advantage is that it can support an unlimited number of receivers, without any service degradation.

A second preferred alternative uses wide-spread personal devices as the audio output device. This scenario considers the use of devices carried and owned by the passenger, such as a PDA, a laptop or even a mobile phone. Specific software may be provided which allows the device to receive the first audio information being multicasted.

With preferred embodiments of the passenger information system according to the invention the central information control arrangement provides a second audio information. The first audio output device is adapted to receive the second audio information. The second audio information is at least partly provided via second radio frequency signals. Furthermore, the second audio information is provided at least partly contemporaneously to the first audio information. This allows for easy simultaneous output of different information to the passenger.

The first and second audio information may be provided by any suitable means. Preferably, the central information control arrangement comprises a second transmitter unit transmitting the second audio information via second radio frequency signals.

Which audio information is output via the first audio output device may depend on the location of the audio output device itself. For example, the first audio output device may only output the audio information received via the radio frequency signals having the highest signal quality. Preferably, the audio output device is adapted to selectively output the first audio information or the second audio information. The selection may be achieved via corresponding selection information input into the first audio output device, e.g. by its user.

The second audio information may be exclusively audio information. In other preferred cases, a second video output device is provided and the central information control arrangement provides second video information to the second video output device, the second video information being synchronized to the second audio information. Thus, e.g. depending on the passengers location, the passenger may be output first audiovisual information or second audiovisual information.

The distribution of the audiovisual information may be achieved in any suitable manner. Preferably, the central information control arrangement comprises a source unit, a first distributor unit connected to the source unit and a second distributor unit connected to the source unit. The source unit provides source information to the first distributor unit and the second distributor unit. The source information comprises at least first audiovisual information and second information, wherein the first audiovisual information comprises the first video information and the first audio information and the second information comprises at least the second audio information. The first distributor unit is adapted to extract the first audiovisual information from the source information provided by the source unit for further transmission. Correspondingly, the second distributor unit is adapted to extract the second information from the source information provided by the source unit for further transmission.

Preferably, the first distributor unit splits the first audiovisual information into the first video information and the first audio information, provides the first video information to the first video output device and provides the first audio information to a first transmitter unit transmitting the first audio information to the first audio output device. Thus, synchronization of the first audio information and the first video information may be obtained easily.

The passenger information system is preferably designed for providing a plurality of passengers with passenger information. Thus, with preferred embodiments of the invention, a second audio output device is provided, the second audio output device being a mobile device connected to the central information control arrangement via an at least partially wireless connection. Preferably, a transmitter unit is provided transmitting audio information via radio frequency signals and the second audio output device comprises a second receiver receiving the radio frequency signals, Via these radio frequency signals any of the audio information mentioned above may be transmitted to the second audio output device as well.

The audio or audiovisual information provided by passenger information system according to the invention may be provided such that it is freely accessible to all passengers. Anyway, with preferred embodiments of the invention, the audio and/or video information may be customized for a certain group of passengers or even personalized, i.e. customized for a single passenger, Thus, preferably, the first radio frequency signals are adapted such that the first audio information is output by the first audio output device but not by the second audio output device. Such an access restriction may be achieved by any suitable means. For example, a special frequency may be used which can only be received by the first audio output device. Alternatively, the first radio frequency signals may be encoded or even encrypted such that they may be decoded or decrypted only by the first audio output device holding the corresponding decoding or decryption means.

As outlined above, any suitable type of wireless data transmission may be used for the first connection in the context of the invention. Furthermore, different types of wireless data transmission may be combined. For example, wide range wireless data transmission may be used for distribution the respective audio information to further transmitters providing the distribution of the audio information to the audio output devices via short range wireless data transmission. Eventually, even the respective video information may be transmitted to the respective display via a wireless data transmission. Thus, preferably, the first connection comprises an analog radio frequency connection. Additionally or alternatively, the first connection comprises a Wi-Fi® connection.

For example, the band from 863 to 865MHz, unlicensed in the RF spectrum, may be used to broadcast the audio information using FM modulation. Anyway, a number of other UHF/VHF frequency bands are unlicensed, and may be freely used. Moreover little or no standardization exists in terms of modulation schemes allowing easy adaptation of the system to the specific needs.

Such a Wi-Fi® connection is for example a wide spread IP-based protocol using radio waves as the physical channel. A common Wi-Fi® connection is also known as the IEEE 802.11b protocol and is widely used nowadays in wireless home network products, such as wireless LAN, wireless access points and ADSL modem/routers. The 802.11b protocol operates in the 2.4GHz unlicensed band, and provides a maximum raw data rate of 11 Mbits/s. The useful data throughput is typically around 5-6 Mbits/s.

The IEEE 802.11 standards do not impose any restrictions on the number of receivers (clients) per base station. In practice the base station or access point will limit the number of connecting clients, typically in the order of 1000, i.e. one access point per vehicle will be sufficient to support all users, i.e. passengers. The reception range for the various wireless LAN standards vary slightly, but are typically beyond 50 m indoor, and more than 100 m outdoor. Higher ranges can be achieved by using special antennas, and increasing the radiated power level.

The data protocols known from the wired LAN domain are reused in a wireless LAN, i.e. essentially Ethernet and IP. These protocols support both point-to-point and point-to-multipoint (broadcast and multicast) connections. The number of connections is only limited by the available bandwidth and by configurable parameters in the devices' protocol stacks. The IEEE 802.11 technology can easily support 4 and more audio channels.

It will be appreciated that, with other embodiments of the invention, other wireless technologies may be used as well. Examples are Bluetooth technology, digital RF technology, infrared technology etc.

Bluetooth is a short-range wireless technology, designed as a low-cost, low-power cable replacement. Bluetooth operates in the 2.4 GHz unlicensed band, and uses a frequency hopping spread spectrum technique. Bluetooth devices are organized in piconets of up to seven active devices. In order to support more than seven users per vehicle, the application of Bluetooth 1.2 will require several Bluetooth master devices per vehicle. Anyway, the limitation of seven devices per piconet will be lifted in the long-awaited Bluetooth 2.0 version.

Other digital RF technologies exist, e.g. in the 2.4 GHz band, using spread spectrum techniques. This applies not only to Bluetooth and wireless LAN, but to other digital RF technologies as well. Different types of spread spectrum techniques exist, the most well-known being direct sequence spread spectrum (DSSS) and frequency hopping (FHSS), as used in Bluetooth devices. Although spread spectrum systems are more expensive than traditional analog FM/AM modulation systems, they offer the advantage of higher immunity to interference, and higher signal quality. This type of solution can support an unlimited number of receivers without service degradation.

Depending on the size of the vehicle and/or the range of transmission to be achieved, it may be sufficient to provide one single first transmitter unit within the vehicle. Preferably, the central information control arrangement comprises a plurality of first transmitter units synchronously transmitting the first audio information via first radio frequency signals, the first transmitter units being distributed within the vehicle.

The invention further relates to an information control arrangement that it is arranged as a central information control arrangement for a passenger information system according to the invention.

The invention further relates to a vehicle, in particular a rail vehicle, comprising a passenger information system according to the invention.

The invention further relates to a method for providing information to a plurality of passengers of a vehicle, in particular a rail vehicle, comprising providing first video information to said passengers and first audio information to one passenger of the plurality passenger, the first video information being received by the plurality of passengers via a first video output device, the first video information and the first audio information being synchronized to provide said one passenger with coherent audiovisual information. According to the invention, the first audio information is provided to said one passenger via a mobile first audio output device receiving the first audio information via an at least partially wireless first connection.

With this method the variants and advantages of the invention described above may be achieved to the same extent. Thus, it is here mainly referred to the explanations given above in the context of the passenger information system according to the invention

Further embodiments of the present invention will become apparent from the dependent claims and the following description of a preferred embodiment of the invention which refers to the appended figures. It is shown in:

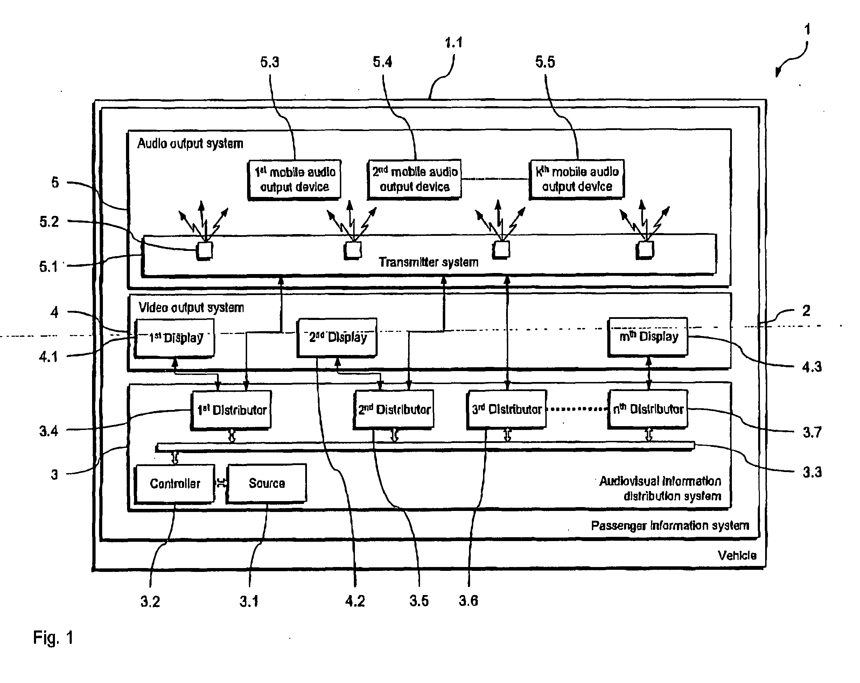

- Figure 1: a schematic representation of a preferred embodiment of a vehicle according to the invention comprising a preferred embodiment of the passenger information system according to the invention using a preferred embodiment of the method for providing information to a passenger according to the invention;

Figure 1 shows a schematic representation of a preferred embodiment of a vehicle 1 according to the invention comprising a preferred embodiment of the passenger information system 2 according to the invention using a preferred embodiment of the method for providing information to a passenger according to the invention.

The vehide 1 is a rail vehicle having a vehicle body 1.1 with one or more passenger compartments for transporting passengers. The passenger information system 2 comprises a central information control arrangement 3, a video output system 4 and an audio output system 5. Both, the video output system 4 and the audio output system 5 are connected to the central information control arrangement 3.

The central information control arrangement is an audiovisual information distribution system 3 comprising a source unit 3.1 being the source of audiovisual information to be provided to some or all of the passengers of the vehicle. The source unit 3.1 may comprise - exclusively or in any arbitrary combination - one or several CD-players, DVD-players, FM or digital radio or television receivers or any other device suitable for being the source of audiovisual information. The source unit 3.1 provides different information of different content. It provides first audiovisual information, second audiovisual information, third audio information, fourth video information and further items of information in the form of audiovisual information, audio information or video information. The information provided by the source unit 3.1 may be of any suitable format.

The source unit 3.1 is connected to a central controller unit 3.2 of the audiovisual information distribution system 3. The central controller unit 3.2 provides central processing functionality, such as central controlling and monitoring etc.

Via a system bus 3.3, the central controller unit 3.2 is connected to a plurality of n distributor units 3.4, 3.5, 3.6, 3.7. Each of these distributor units 3.4, 3.5, 3.6, 3.7 is dedicated to a certain item of information. Thus, the first distributor unit 3.4 is dedicated to the first audiovisual information provided from the source unit 3.1 to the system bus 3.3 via the central controller unit 3.2. The first audiovisual information is an audiovisual information having infotainment content, e.g. news bulletins or the like.

The second distributor unit 3.5 is dedicated to the second audiovisual information provided from the source unit 3.1 to the system bus 3.3 via the central controller unit 3.2. The second audiovisual information is an audiovisual information having infotainment content different from the content of the first audiovisual information.

The third distributor unit 3.6 is dedicated to the third audio information provided from the source unit 3.1 to the system bus 3.3 via the central controller unit 3.2. The third audio information is an information exclusively in audio format, having infotainment content different from the content of the first and second audiovisual information. For example, it may be an FM radio program.

The *n*^{th} distributor unit 3.7 is dedicated to the fourth video information provided from the source unit 3.1 to the system bus 3.3 via the central controller unit 3.2. The fourth video information is an information exclusively in video format, having vehicle related information content different from the content of the other information mentioned above. For example, it may be information relating to the vehicle schedule, next stations to stop, delays etc.

Each of the above different items of information might also be considered as an information channel. Thus, in other words, the first audiovisual information represents a first audiovisual channel, the second audiovisual information represents a second audiovisual channel, the third audio information represents a (third) audio channel, and the fourth video information represents a (fourth) video channel.

It will be appreciated that further distributor units may be provided, dedicated to further items of information or channels, respectively, which may contain audiovisual information, audio information or video information.

Each distributor unit 3.4, 3.5, 3.6, 3.7 extracts the item of information or channel, respectively, it is dedicated to from the information provided via the system bus 3.3. In case of dedication to audiovisual information, the respective distributor unit 3.4, 3.5 splits the audiovisual information into audio and video information, The video information is provided to the associated display unit of the video output system 4, while the audio information is provided to the audio output system 5.

Thus, the first distributor unit 3.4 extracts the first audiovisual information or channel, respectively, from the information provided via the system bus 3.3. The first distributor unit 3.4 then splits the first audiovisual information into first audio information and first video information. The first video information is provided to the first display unit 4.1, e.g. an LCD display, of the video output system 4.

Furthermore, the first audio information is provided to the audio output system 5. The audio output system 5 comprises a transmitter system 5.1 which, in turn, comprises a plurality of radio frequency signal transmitters 5.2 evenly distributed throughout the vehicle. The transmitter system 5.1 converts the first audio information into first radio frequency signals and emits these first radio frequency signals via the transmitters 5.2. The first radio frequency signals are received by each one of a plurality of k audio output devices 5.3, 5.4, 5.5 carried by passengers of the vehicle.

Thus, the first radio frequency signals carrying the first audio information are received by the first audio output device 5.3 carried by a first passenger of the vehicle. To this end, the first audio output device 5.3 comprises receiver and transformer circuitry for receiving the first radio frequency signals and transforming it into sound signals output to the first passenger via a loudspeaker integrated into a headphone of the audio output device 5.3, for example. Thus, in other words, the mobile first audio output device 5.3 is connected to the audiovisual information distribution system 3 via a partially wireless first connection.

The first distributor unit 3.4 forwards the first audio information and the first video information in such a manner that the first video information output on the first display 4.1 and the first audio information output via first audio output device 5.3 are output in a synchronous way. To this end, the first distributor unit 3.4, if needed, accounts for any delays which occur on the path of the respective information to its associated output device.

The first radio frequency signals carrying the first audio information may also be received by the second audio output device 5.4 carried by a second passenger of the vehicle. The second audio output device 5.4 also comprises receiver and transformer circuitry for receiving the first radio frequency signals and transforming it into sound signals output to the second passenger via a loudspeaker integrated into a headphone of the second audio output device 5.4 for example. The same may apply to any other audio output device carried by another passenger of the vehicle.

Anyway, it will be appreciated that, with certain embodiments of the invention, the first radio frequency signals carrying the first audio information may also be encoded or encrypted, such that only audio output devices holding corresponding decoding or decryption means, such as decoding or decryption keys and/or algorithms, may be able to transform the first radio frequency signals into coherent clear text information interpretable by the respective passenger. Thus, in a very simple manner, the distribution of customized information is possible.

The customization may be for a certain group of passengers, e.g. subscribers to a certain service. Members of such a group of passengers may then be provided with additional audio information which goes beyond the information other non-members receive via the video information on the first display 4.1 and, eventually, less comprehensive audio information forwarded to them via their audio output device.

The information may even be personalized, i.e. customized for a single person, e.g. the passenger holding the first audio output device 5,3. For example, the first audio information output via the first audio output device 5.3 and synchronized with the first video information output via the first display 4.1, e.g. a news bulletin, may be completely or partly overlaid by other audio information personalized to the first passenger. This audio information personalized to the first passenger may for example be voice mail messages or the like. Of course, it may be provided that the first passenger may suppress such an overlay by corresponding inputs into the first audio output device 5.3.

In an analogous manner, the second distributor unit 3.5 extracts the second audiovisual information or channel, respectively, from the information provided via the system bus 3.3. The second distributor unit 3.5 then splits the second audiovisual information into second audio information and second video information. The second video information is provided to the second display unit 4.2, e.g. an LCD display, of the video output system 4.

Here as well, the second audio information is provided to the audio output system 5. The transmitter system 5.1 converts the second audio information into second radio frequency signals and emits these second radio frequency signals via the transmitters 5.2. The second radio frequency signals are received by each one of the k audio output devices 5.3, 5.4, 5.5 carried by passengers of the vehicle.

The operation of the second distributor unit 3.5 is contemporaneous to the operation of the first distributor unit 3.4. Thus, the first and second audiovisual information are provided contemporaneously to the passengers.

The second radio frequency signals carrying the second audio information are received, for example, by the first audio output device 5.3 carried by the first passenger. The receiver and transformer circuitry of the first audio output device 5.3 is adapted to transform the second radio frequency signals into sound signals that may be output to the first passenger via the headphone of the audio output device 5.3.

The first distributor unit 3.4 as well forwards the second audio information and the second video information in such a manner that the second video information output on the second display 4.2 and the second audio information butput via the second audio output device 5.4 are output in a synchronous way.

By entering corresponding selection information into the first audio output device 5.3, the first passenger may select to be output the first audio information or the second audio information. To this end, a corresponding channel selection input device, such as a input key or knob may be provided.

In a similar way, the third distributor unit 3.6 extracts the third information or channel, respectively, from the information provided via the system bus 3.3. Since the third information exclusively contains audio information, the third distributor unit 3.5 simply forwards the third audio information to the audio output system 5. The transmitter system 5.1 converts the third audio information into third radio frequency signals and emits these third radio frequency signals via the transmitters 5.2. The third radio frequency signals are received by each one of the k audio output devices 5.3, 5.4, 5.5 carried by passengers of the vehicle. Again, by entering corresponding selection information into the first audio output device 5.3, the first passenger may select to be output the third audio information.

Finally, In a similar way, the *n*^{th} distributor unit 13.7 extracts the fourth information or channel, respectively, from the information provided via the system bus 3.3. Since the fourth information exclusively contains video information, the *n*^{th} distributor unit 3.5 simply forwards the fourth video information to the *m*^{th} display 4.3.

In a first preferred alternative, the respective mobile audio output device 5.3, 5.4, 5.5 comprises a custom analog RF receiver. This scenario uses a proprietary device designed specifically for the respective passenger information system 2. This technology has the advantage that it provides a low cost device within everyone's budget. Another advantage is that it can support an unlimited number of receivers, i.e. passengers, without any service degradation.

A second preferred alternative uses wide-spread personal devices as the mobile audio output device 5,3, 5.4, 5.5. This scenario considers the use of devices carried and owned by the passenger, such as a PDA, a laptop or even a mobile phone. Specific software may be provided which allows the device 5.3, 5.4, 5.5!to receive the respective audio information being multicasted. It will be appreciated that, with such personal devices having a display, it is also possible to use the latter as the respective video output device 4.1, 4.2, 4.3.

It will be appreciated that the system bus 3.3 may be a hardware bound bus or a wireless bus. Similarly, the connection between the respective distributor unit and the associated display unit and/or the transmitter system 5.1 may be a hard wired connection or a wireless connection.

It will be further appreciated that the functionality described above is the same regardless of the actual chosen technology for the wireless part of the first connection. As outlined above, any suitable type of wireless data transmission may be used for the first connection in the context of the invention. Furthermore, different types of wireless data transmission may be combined. For example, wide range wireless data transmission may be used for distribution the respective audio information to the transmitters 5,2 providing the distribution of the audio information to the audio output devices 5.3, 5.4, 5.5 via short range wireless data transmission. Eventually, as mentioned, even the respective video information may be transmitted to the respective display 4.1, 4.2, 4.3 via a wireless data transmission.

The first connection may thus comprise an analog radio frequency connection for providing the distribution of the respective audio information to the audio output devices 5.3, 5.4, 5.5. For example, the band from 863 to 865MHz, unlicensed in the RF spectrum, may be used to broadcast the audio information using FM modulation. Anyway, a number of other UHF/VHF frequency bands are unlicensed, and may be freely used. Moreover little or no standardization exists in terms of modulation schemes allowing easy adaptation of the system to the specific needs.

Additionally or alternatively, the first connection may comprise a Wi-Fi® connection for providing the distribution of the respective audio information to the audio output devices 5.3, 5.4, 5.5.. Such a common Wi-Fi® connection is also known as the IEEE 802.11b protocol and is widely used nowadays in wireless home network products. The 802.11b protocol operates in the 2.4 GHz unlicensed band, and provides a maximum raw data rate of 11 Mbits/s. The useful data throughput is typically around 5-6 Mbits/s. As mentioned above, the IEEE 802.11 standards does impose virtually no restrictions on the number of receivers (dients) per base station at a reception range of typically beyond 50 m indoor, and more than 100 m outdoor.

It will be appreciated that, with other embodiments of the invention, other wireless technologies may be used as well for providing the distribution of the respective audio information to the audio output devices 5.3, 5.4, 5.5, Examples are Bluetooth technology, digital RF technology, infrared technology etc. As mentioned above, other digital RF technologies exist, e.g. in the 2.4 GHz band, using spread spectrum techniques.

No matter what wireless technology is used, the system is setup in order to avoid interferences with other systems, with crossing vehicles, between channels and between transmitters. To this end, the parameters to set up are antenna location in the vehicle, antenna characteristics (such as radiation pattern, gain etc.), RF signal strength, frequency separation between channels etc.

Moreover passengers are walking around, and thus changing their connection from one transmitter 5.2 to another. This handover is handled by the transmitter system 5.1 and connecting from one transmitter 5.2 to another will not result in an audible connection loss at the respective audio output device 5.3, 5.4, 5.5.

The number of items of information or channels, respectively, available within the passenger information system 2 depends on the wireless technology being used. Preferably, there are at least two audio channels each of them synchronized with one of the two video channels being displayed by the infotainment monitors and one channel available for audio only.

## Claims

1. Passenger information system for a vehicle, in particular a rail vehicle, comprising:
- a central information control arrangement (3);
- at least a first video output device (4.1);
- at least a first audio output device (5.3);
- said central information control arrangement (3) providing first video information to said first video output device (4.1) and first audio information to said first audio output device (5.3);
- said central information control arrangement (3) synchronizing said first video information and said first audio information to provide a passenger of said vehicle (1) with coherent audiovisual information,
- said first video output device (4.1) being assigned to be used by a plurality of passengers to receive said first video information;
**characterized in that**
- said first audio output device (5.3) is a mobile device connected to said central information control arrangement (3) via an at least partially wireless first connection.

2. Passenger information system according to claim 1, **characterized in that**
- a first transmitter unit (5.2) is provided transmitting said first audio information via first radio frequency signals and
- said audio output device (5.3) comprises a first receiver receiving said first radio frequency signals.

3. Passenger information system according to claim 1 or 2, **characterized in that**
- said central information control arrangement (3) provides a second audio information,
- said first audio output device (5.3) is adapted to receive said second audio information,
- said second audio information at least partly being provided via second radio frequency signals, and
- said second audio information being provided at least partly contemporaneously to said first audio information.

4. Passenger information system according to claim 3, **characterized in that** a transmitter unit (5.2) is provided transmitting said second audio information via second radio frequency signals.

5. Passenger information system according to claim 3 or 4, **characterized in that** said first audio output device (5.3) is adapted to selectively output said first audio information or said second audio information.

6. Passenger information system according to any one of claims 3 to 5, **characterized in that**
- a second video output device (4.2) is provided;
- said central information control arrangement (3) providing second video information to said second video output device (4.2);
- said second video information being synchronized to said second audio information.

7. Passenger information system according to any one of claims 3 to 6, **characterized in that** said central information control arrangement (3) comprises
- a source unit (3.1),
- a first distributor unit (3.4) connected to said source unit (3.1) and
- a second distributor (3.5) unit connected to said source unit (3.1);
- said source unit (3.1) providing source information to said first distributor unit (3.4) and said second distributor (3.5) unit,
- said source information comprising at least first audiovisual information and second information,
- said first audiovisual information comprising said first video information and said first audio information;
- said second information comprising at least said second audio information;
- said first distributor unit (3.4) being adapted to extract said first audiovisual information from said source information for further transmission;
- said second distributor unit (3.5) being adapted to extract said second information from said source information for further transmission.

8. Passenger information system according to claim 7, **characterized in that** said first distributor unit (3.4)
- splits said first audiovisual information into said first video information and said first audio information,
- provides said first video information to said first video output device (4.1) and
- provides said first audio information to a transmitter unit (5.2) transmitting said first audio information said first audio output device (5.3).

9. Passenger information system according to any one of the preceding claims, **characterized in that** a second audio output device (5.4) is provided, said second audio output device (5.4) being a mobile device connected to said central information control arrangement (3) via an at least partially wireless connection.

10. Passenger information system according to claim 9, **characterized in that**
- a transmitter unit (5.2) is provided transmitting audio information via radio frequency signals,
- said second audio output device (5.4) comprising a second receiver receiving said radio frequency signals.

11. Passenger information system according to claim 10, **characterized in that** said first radio frequency signals are adapted such that said first audio information is output by said first audio output device (5.3) but not by said second audio output device (5.4).

12. Passenger information system according to any one of the preceding claims, **characterized in that** said first connection comprises an analog radio frequency connection and/or a WiFi® connection.

13. Passenger information system according to any one of the preceding claims, **characterized in that**
- a plurality of first transmitter units (5.2) is provided,
- said first transmitter units (5.2) synchronously transmitting said first audio information via first radio frequency signals,
- said first transmitter units (5.2) being distributed within said vehicle (1).

14. Information control arrangement, **characterized in that** it is arranged as a central information control arrangement (3) for a passenger information system (2) according to any one of the preceding claims.

15. Vehicle, in particular rail vehicle, comprising a passenger information system (2) according to any one of claims 1 to 13.

16. Method for providing information to a plurality of passengers of a vehicle, in particular a rail vehicle, comprising:
- providing first video information to said passengers and
- providing first audio information to a passenger of said plurality of passengers;
- said first video information being received by said plurality of passengers via a first video output device (4.1);
- said first video information and said first audio information being synchronized to provide said one passenger with coherent audiovisual information,
**characterized in that**
- said first audio information is provided to said passenger via a mobile first audio output device (5.3) receiving said first audio information via an at least partially wireless first connection.

17. Method according to claim 16, **characterized in that** said first audio information is provided to said first audio output device (5.3) via first radio frequency signals.

18. Method according to claim 16 or 17, **characterized in that**
- second audio information is at least partly provided to said first audio output device (5.3) via second radio frequency signals,
- said second audio information being provided at least partly contemporaneously to said first audio information.

19. Method according to claim 18, **characterized in that**
- a selection information is input into said first audio output device (5.3) and
- said first audio information or said second audio information is output via said first audio output device (5.3) depending on said selection information.

20. Method according to claim 18 or 19, **characterized in that**
- second video information is provided to a second video output device (4.2),
- said second video information being synchronized to said second audio information.

21. Method according to any one of claims 16 to 20, **characterized in that**
- source information is provided by an information source (3.1)
- said source information comprising first audiovisual information and second information,
- said first audiovisual information comprising said first video information and said first audio information,
- said second information comprising at least second audio information;
- said first audiovisual information is extracted from said source information by a first distributor unit (3.4) for further transmission;
- said second information is extracted from said source information by a second distributor unit (3.5) for further transmission.

22. Method according to claim 21, **characterized in that** said
- said first audiovisual information is split into said first video information and said first audio information,
- said first video information is provided to said first video output device (4.1) and
- said first audio information is transmitted to said first audio output device (5.3).

23. Method according to any one of claims 16 to 22, **characterized in that** audio information is provided to a mobile second audio output device (5.4) via an at least partially wireless connection, in particular via radio frequency signals.

24. Method according to claim 23, **characterized in that** said first radio frequency signals are adapted such that said first audio information is output by said first audio output device (5.3) but not by said second audio output device (5.4).

25. Method according to any one of claims 16 to 24, **characterized in that** said first connection comprises an analog radio frequency connection and/or a WiFi® connection.

26. Method according to any one of claims 16 to 25, **characterized in that** said first audio information is synchronously transmitted via first radio frequency signals by a plurality of first transmitter units (52) being distributed within said vehicle (1).

## Patentansprüche

1. Fahrgastinformationssystem für ein Fahrzeug, insbesondere ein Schienenfahrzeug, umfassend:
- eine zentrale Informationssteueranordnung (3);
- mindestens eine erste Videoausgabevorrichtung (4.1);
- mindestens eine erste Audioausgabevorrichtung (5.3);
- wobei die zentrale Informationssteueranordnung (3) der ersten Videoausgabevorrichtung (4.1) erste Videoinformationen und der ersten Audioausgabevorrichtung (5.3) erste Audioinformationen bereitstellt;
- wobei die zentrale Informationssteueranordnung (3) die ersten Videoinformationen und die ersten Audioinformationen synchronisiert, um einem Fahrgast des Fahrzeugs (1) kohärente audiovisuelle Informationen bereitzustellen;
- wobei die erste Videoausgabevorrichtung (4.1) dafür vorgesehen ist von mehreren Fahrgästen verwendet zu werden, um die ersten Videoinformationen zu empfangen;
**dadurch gekennzeichnet, dass**
- die erste Audioausgabevorrichtung (5.3) eine mobile Vorrichtung ist, die über eine zumindest teilweise drahtlose erste Verbindung mit der zentralen Informationssteueranordnung (3) verbunden ist.

2. Fahrgastinformationssystem nach Anspruch 1, **dadurch gekennzeichnet, dass**
- eine erste Sendeeinheit (5.2) vorgesehen ist, die die ersten Audioinformationen über erste Funkfrequenzsignale sendet, und
- die Audioausgabevorrichtung (5.3) einen ersten Empfänger umfasst, der die ersten Funkfrequenzsignale empfängt.

3. Fahrgastinformationssystem nach Anspruch 1 oder 2, **dadurch gekennzeichnet, dass**
- die zentrale Informationssteueranordnung (3) zweite Audioinformationen bereitstellt,
- die erste Audioausgabevorrichtung (5.3) dazu ausgebildet ist, die zweiten Audioinformationen zu empfangen,
- wobei die zweiten Audioinformationen zumindest teilweise über zweite Funkfrequenzsignale bereitgestellt werden, und
- wobei die zweiten Audioinformationen zumindest teilweise gleichzeitig mit den ersten Audioinformationen bereitgestellt werden.

4. Fahrgastinformationssystem nach Anspruch 3, **dadurch gekennzeichnet, dass** eine Sendeeinheit (5.2) vorgesehen ist, die die zweiten Audioinformationen über zweite Funkfrequenzsignale sendet.

5. Fahrgastinformationssystem nach Anspruch 3 oder 4, **dadurch gekennzeichnet, dass** die erste Audioausgabevorrichtung (5.3) dazu ausgebildet ist, die ersten Audioinformationen oder die zweiten Audioinformationen selektiv auszugeben.

6. Fahrgastinformationssystem nach einem der Ansprüche 3 bis 5, **dadurch gekennzeichnet, dass**
- eine zweite Videoausgabevorrichtung (4.2) vorgesehen ist;
- wobei die zentrale Informationssteueranordnung (3) der zweiten Videoausgabevorrichtung (4.2) zweite Videoinformationen bereitstellt;
- wobei die zweiten Videoinformationen mit den zweiten Audioinformationen synchronisiert werden.

7. Fahrgastinformationssystem nach einem der Ansprüche 3 bis 6, **dadurch gekennzeichnet, dass** die zentrale Informationssteueranordnung (3) Folgendes umfasst:
- eine Quelleinheit (3.1),
- eine mit der Quelleinheit (3.1) verbundene erste Verteilereinheit (3.4) und
- eine mit der Quelleinheit (3.1) verbundene zweite Verteilereinheit (3.5);
- wobei die Quelleinheit (3.1) der ersten Verteilereinheit (3.4) und der zweiten Verteilereinheit (3.5) Quellinformationen bereitstellt,
- wobei die Quellinformationen mindestens erste audiovisuelle Informationen und zweite Informationen umfassen;
- wobei die ersten audiovisuellen Informationen die ersten Videoinformationen und die ersten Audioinformationen umfassen;
- wobei die zweiten Informationen mindestens die zweiten Audioinformationen umfassen;
- wobei die erste Verteilereinheit (3.4) dazu ausgebildet ist, die ersten audiovisuellen Informationen aus den Quellinformationen zum weiteren Senden zu extrahieren;
- wobei die zweite Verteilereinheit (3.5) dazu ausgebildet ist, die zweiten Informationen aus den Quellinformationen zum weiteren Senden zu extrahieren.

8. Fahrgastinformationssystem nach Anspruch 7, **dadurch gekennzeichnet, dass** die erste Verteilereinheit (3.4)
- die ersten audiovisuellen Informationen in die ersten Videoinformationen und die ersten Audioinformationen aufteilt,
- der ersten Videoausgabevorrichtung (4.1) die ersten Videoeinformationen bereitstellt und
- einer Sendeeinheit (5.2) die ersten Audioinformationen bereitstellt, wobei die Sendeeinheit (5.2) die ersten Audioinformationen an die erste Audioausgabevorrichtung (5.3) sendet.

9. Fahrgastinformationssystem nach einem der vorhergehenden Ansprüche, **dadurch gekennzeichnet, dass** eine zweite Audioausgabevorrichtung (5.4) vorgesehen ist, wobei die zweite Audioausgabevorrichtung (5.4) eine mobile Vorrichtung ist, die über eine zumindest teilweise drahtlose Verbindung mit der zentralen Informationssteueranordnung (3) verbunden ist.

10. Fahrgastinformationssystem nach Anspruch 9, **dadurch gekennzeichnet, dass**
- eine Sendeeinheit (5.2) vorgesehen ist, die Audioinformationen über Funkfrequenzsignale sendet,
- wobei die zweite Audioausgabevorrichtung (5.4) einen zweiten Empfänger umfasst, der die Funkfrequenzsignale empfängt.

11. Fahrgastinformationssystem nach Anspruch 10, **dadurch gekennzeichnet, dass** die ersten Funkfrequenzsignale derart ausgebildet sind, dass die ersten Audioinformationen von der ersten Audioausgabevorrichtung (5.3) ausgegeben werden, aber nicht von der zweiten Audioausgabevorrichtung (5.4).

12. Fahrgastinformationssystem nach einem der vorhergehenden Ansprüche, **dadurch gekennzeichnet, dass** die erste Verbindung eine analoge Funkfrequenzverbindung und/oder eine WiFi®-Verbindung umfasst.

13. Fahrgastinformationssystem nach einem der vorhergehenden Ansprüche, **dadurch gekennzeichnet, dass**
- mehrere erste Sendeeinheiten (5.2) vorgesehen sind,
- wobei die ersten Sendeeinheiten (5.2) die ersten Audioinformationen über erste Funkfrequenzsignale synchron senden,
- wobei die ersten Sendeeinheiten (5.2) innerhalb des Fahrzeugs (1) verteilt sind.

14. Informationssteueranordnung, **dadurch gekennzeichnet, dass** sie als zentrale Informationssteueranordnung (3) für ein Fahrgastinformationssystem (2) nach einem der vorhergehenden Ansprüche ausgebildet ist.

15. Fahrzeug, insbesondere ein Schienenfahrzeug, das ein Fahrgastinformationssystem (2) nach einem der Ansprüche 1 bis 13 umfasst.

16. Verfahren zum Bereitstellen von Informationen für eine Mehrzahl von Fahrgästen eines Fahrzeugs, insbesondere eines Schienenfahrzeugs, umfassend:
- Bereitstellen erster Videoinformationen für die Fahrgäste und
- Bereitstellen erster Audioinformationen für einen Fahrgast aus der Mehrzahl von Fahrgästen;
- wobei die ersten Videoinformationen von der Mehrzahl von Fahrgästen über eine erste Videoausgabevorrichtung (4.1) empfangen werden;
- wobei die ersten Videoinformationen und die ersten Audioinformationen synchronisiert werden, um dem Fahrgast kohärente audiovisuelle Informationen bereitzustellen,
**dadurch gekennzeichnet, dass**
- die ersten Audioinformationen dem Fahrgast über eine mobile erste Audioausgabevorrichtung (5.3) bereitgestellt werden, die die ersten Audioinformationen über eine zumindest teilweise drahtlose Verbindung empfängt.

17. Verfahren nach Anspruch 16, **dadurch gekennzeichnet, dass** die ersten Audioinformationen der ersten Audioausgabevorrichtung (5.3) über erste Funkfrequenzsignale bereitgestellt werden.

18. Verfahren nach Anspruch 16 oder 17, **dadurch gekennzeichnet, dass**
- zweite Audioinformationen der ersten Audioausgabevorrichtung (5.3) zumindest teilweise über zweite Funkfrequenzsignale bereitgestellt werden,
- wobei die zweiten Audioinformationen zumindest teilweise gleichzeitig mit den ersten Audioinformationen bereitgestellt werden.

19. Verfahren nach Anspruch 18, **dadurch gekennzeichnet, dass**
- eine Auswahlinformation in die erste Audioausgabevorrichtung (5.3) eingegeben wird und
- die ersten Audioinformationen oder die zweiten Audioinformationen über die erste Audioausgabevorrichtung (5.3) in Abhängigkeit von der Auswahlinformation ausgegeben werden.

20. Verfahren nach Anspruch 18 oder 19, **dadurch gekennzeichnet, dass**
- zweite Videoinformationen einer zweiten Videoausgabevorrichtung (4.2) bereitgestellt werden,
- wobei die zweiten Videoinformationen mit den zweiten Audioinformationen synchronisiert werden.

21. Verfahren nach einem der Ansprüche 16 bis 20, **dadurch gekennzeichnet, dass**
- Quellinformationen von einer Informationsquelle (3.1) bereitgestellt werden,
- wobei die Quellinformationen erste audiovisuelle Informationen und zweite Informationen umfassen,
- wobei die ersten audiovisuellen Informationen die ersten Videoinformationen und die ersten Audioinformationen umfassen,
- wobei die zweiten Informationen zumindest zweite Audioinformationen umfassen;
- wobei die ersten audiovisuellen Informationen aus den Quellinformationen durch eine erste Verteilereinheit (3.4) zum weiteren Senden extrahiert werden;
- wobei die zweiten Informationen aus den Quellinformationen durch eine zweite Verteilereinheit (3.5) zum weiteren Senden extrahiert werden.

22. Verfahren nach Anspruch 21, **dadurch gekennzeichnet, dass**
- die ersten audiovisuellen Informationen in die ersten Videoinformationen und die ersten Audioinformationen aufgeteilt werden,
- die ersten Videoinformationen der ersten Videoausgabevorrichtung (4.1) bereitgestellt werden und
- die ersten Audioinformationen an die erste Audioausgabevorrichtung (5.3) gesendet werden.

23. Verfahren nach einem der Ansprüche 16 bis 22, **dadurch gekennzeichnet, dass** Audioinformationen einer mobilen zweiten Audioausgabevorrichtung (5.4) über eine zumindest teilweise drahtlose Verbindung, insbesondere über Funkfrequenzsignale bereitgestellt werden.

24. Verfahren nach Anspruch 23, **dadurch gekennzeichnet, dass** die ersten Funkfrequenzsignale so ausgebildet sind, dass die ersten Audioinformationen von der ersten Audioausgabevorrichtung (5.3) ausgegeben werden, aber nicht von der zweiten Audioausgabevorrichtung (5.4).

25. Verfahren nach einem der Ansprüche 16 bis 24, **dadurch gekennzeichnet, dass** die erste Verbindung eine analoge Funkfrequenzverbindung und/oder eine WiFi®-Verbindung umfasst.

26. Verfahren nach einem der Ansprüche 16 bis 25, **dadurch gekennzeichnet, dass** die ersten Audioinformationen synchron über erste Funkfrequenzsignale durch mehrere erste Sendeeinheiten (5.2), die innerhalb des Fahrzeugs (1) verteilt sind, gesendet werden.

## Revendications

1. Système d'informations pour passagers destiné à un véhicule, en particulier un véhicule ferroviaire, comprenant :
- un arrangement de commande d'informations centralisé (3),
- au moins un premier dispositif de sortie vidéo (4.1),
- au moins un premier dispositif de sortie audio (5.3),
- ledit arrangement de commande d'informations centralisé (3) fournissant des premières informations vidéo au premier dispositif de sortie vidéo (4.1) et des premières informations audio au premier dispositif de sortie audio (5.3),
- ledit arrangement de commande d'informations centralisé (3) synchronisant lesdites premières informations vidéo et lesdites premières informations audio de façon à fournir à un passager dudit véhicule (1) des informations audiovisuelles cohérentes,
- ledit premier dispositif de sortie vidéo (4.1) étant assigné de façon à être utilisé par une pluralité de passagers pour recevoir lesdites premières informations vidéo,
**caractérisé en ce que**
- ledit premier dispositif de sortie audio (5.3) est un dispositif mobile raccordé audit arrangement de commande d'informations centralisé (3) par l'intermédiaire d'une première connexion au moins partiellement sans fil.

2. Système d'informations pour passagers selon la revendication 1, **caractérisé en ce que**
- une première unité de transmission (5.2) est fournie pour transmettre lesdites premières informations audio par l'intermédiaire de premiers signaux radioélectriques et
- ledit dispositif de sortie audio (5.3) comprend un premier récepteur recevant lesdits premiers signaux radioélectriques.

3. Système d'informations pour passagers selon la revendication 1 ou 2, **caractérisé en ce que**
- ledit arrangement de commande d'informations centralisé (3) fournit des deuxièmes informations audio,
- ledit dispositif de sortie audio (5.3) est adapté de façon à recevoir lesdites deuxièmes informations audio,
- lesdites deuxièmes informations audio étant au moins partiellement fournies par l'intermédiaire de deuxièmes signaux radioélectriques, et
- lesdites deuxièmes informations audio étant fournies au moins partiellement simultanément avec lesdites premières informations audio.

4. Système d'informations pour passagers selon la revendication 3, **caractérisé en ce qu'**une unité de transmission (5.2) est fournie pour transmettre lesdites deuxièmes informations audio par l'intermédiaire de deuxièmes signaux radioélectriques.

5. Système d'informations pour passagers selon la revendication 3 ou 4, **caractérisé en ce que** ledit dispositif de sortie audio (5.3) est adapté de façon à sortir de manière sélective lesdites premières informations audio ou lesdites deuxièmes informations audio.

6. Système d'informations pour passagers selon l'une quelconque des revendications 3 à 5, **caractérisé en ce que**
- un deuxième dispositif de sortie vidéo (4.2) est fourni,
- ledit arrangement de commande d'informations centralisé (3) fournissant des deuxièmes informations vidéo audit deuxième dispositif de sortie vidéo (4.2),
- lesdites deuxièmes informations vidéo étant synchronisées avec lesdites deuxièmes informations audio.

7. Système d'informations pour passagers selon l'une quelconque des revendications 3 à 6, **caractérisé en ce que** ledit arrangement de commande d'informations centralisé (3) comprend
- une unité source (3.1),
- une première unité de distribution (3.4) raccordée à ladite unité source (3.1), et
- une deuxième unité de distribution (3.5) raccordée à ladite unité source (3.1),
- ladite unité source (3.1) fournissant des informations source à ladite première unité de distribution (3.4) et à ladite deuxième unité de distribution (3.5),
- lesdites informations source contenant au moins des premières informations audiovisuelles et des deuxièmes informations,
- lesdites premières informations audiovisuelles contenant lesdites premières informations vidéo et lesdites premières informations audio,
- lesdites deuxièmes informations contenant au moins lesdites deuxièmes informations audio,
- ladite première unité de distribution (3.4) étant adaptée de façon à extraire lesdites premières informations audiovisuelles desdites informations source pour la transmission consécutive,
- ladite deuxième unité de distribution (3.5) étant adaptée de façon à extraire lesdites deuxièmes informations desdites informations source pour la transmission consécutive.

8. Système d'informations pour passagers selon la revendication 7, **caractérisé en ce que** ladite première unité de distribution (3.4)
- fractionne lesdites premières informations audiovisuelles en lesdites premières informations vidéo et lesdites premières informations audio,
- fournit lesdites premières informations vidéo audit premier dispositif de sortie vidéo (4.1) et
- fournit lesdites premières informations audio à une unité de transmission (5.2) transmettant lesdites premières informations audio audit premier dispositif de sortie audio (5.3).

9. Système d'informations pour passagers selon l'une quelconque des revendications précédentes, **caractérisé en ce qu'**un deuxième dispositif de sortie audio (5.4) est fourni, ledit deuxième dispositif de sortie audio (5.4) étant un dispositif mobile raccordé audit système de commande d'informations centralisé (3) par l'intermédiaire d'une connexion au moins partiellement sans fil.

10. Système d'informations pour passagers selon la revendication 9, **caractérisé en ce que**
- une unité de transmission (5.2) est fournie pour transmettre des informations audio par l'intermédiaire de signaux radioélectriques,
- ledit deuxième dispositif de sortie audio (5.4) comprenant un deuxième récepteur recevant lesdits signaux radioélectriques.

11. Système d'informations pour passagers selon la revendication 10, **caractérisé en ce que** lesdits premiers signaux radioélectriques sont adaptés de sorte que les premières informations audio soient sorties par ledit premier dispositif de sortie audio (5.3) mais pas par ledit deuxième dispositif de sortie audio (5.4).

12. Système d'informations pour passagers selon l'une quelconque des revendications précédentes, **caractérisé en ce que** ladite première connexion comprend une connexion radioélectrique analogique et/ou une connexion Wi-Fi®.

13. Système d'informations pour passagers selon l'une quelconque des revendications précédentes, **caractérisé en ce que**
- une pluralité de premières unités de transmission (5.2) sont fournies,
- lesdites premières unités de transmission (5.2) transmettant de manière synchronisée lesdites premières informations audio par l'intermédiaire de premiers signaux radioélectriques,
- lesdites premières unités de transmission (5.2) étant réparties à l'intérieur dudit véhicule (1).

14. Arrangement de commande d'informations centralisé, **caractérisé en ce qu'**il est agencé sous la forme d'un arrangement de commande d'informations centralisé (3) pour un système d'informations pour passagers (2) selon l'une quelconque des revendications précédentes.

15. Véhicule, en particulier un véhicule ferroviaire, comprenant un système d'informations pour passagers (2) selon l'une quelconque des revendications 1 à 13.

16. Procédé de fourniture d'informations à une pluralité de passagers d'un véhicule, plus particulièrement un véhicule ferroviaire, comprenant :
- la fourniture de premières informations vidéo auxdits passagers, et
- la fourniture de premières informations audio à un passager de ladite pluralité de passagers,
- lesdites premières informations vidéo étant reçues par ladite pluralité de passagers par l'intermédiaire d'un premier dispositif de sortie vidéo (4.1),
- lesdites premières informations vidéo et lesdites premières informations audio étant synchronisées de façon à fournir audit un passager des informations audiovisuelles cohérentes,
**caractérisé en ce que**
- lesdites premières informations audio sont fournies audit passager via un premier dispositif de sortie audio mobile (5.3) recevant lesdites premières informations audio par l'intermédiaire d'une première connexion au moins partiellement sans fil.

17. Procédé selon la revendication 16, **caractérisé en ce que** lesdites premières informations audio sont fournies audit premier dispositif de sortie audio (5.3) par l'intermédiaire de premiers signaux radioélectriques.

18. Procédé selon la revendication 16 ou 17, **caractérisé en ce que**
- les deuxièmes informations audio sont au moins partiellement fournies audit premier dispositif de sortie audio (5.3) par l'intermédiaire de deuxièmes signaux radioélectriques,
- lesdites deuxièmes informations audio étant fournies au moins partiellement simultanément avec lesdites premières informations audio.

19. Procédé selon la revendication 18, **caractérisé en ce que**
- une information de sélection est entrée dans ledit premier dispositif de sortie audio (5.3) et,
- lesdites premières informations audio ou lesdites deuxièmes informations audio sont produites par l'intermédiaire dudit premier dispositif de sortie audio (5.3) en fonction de ladite information de sélection.

20. Procédé selon la revendication 18 ou 19, **caractérisé en ce que**
- des deuxièmes informations vidéo sont fournies à un deuxième dispositif de sortie vidéo (4.2),
- lesdites deuxièmes informations vidéo étant synchronisées avec lesdites deuxièmes informations audio.

21. Procédé selon l'une quelconque des revendications 16 à 20, **caractérisé en ce que**
- lesdites informations source sont fournies par une source d'informations (3.1),
- lesdites informations source contenant des premières informations audiovisuelles et des deuxièmes informations,
- lesdites premières informations audiovisuelles contenant lesdites premières informations vidéo et lesdites premières informations audio,
- lesdites deuxièmes informations contenant au moins les deuxièmes informations audio,
- lesdites premières informations audiovisuelles sont extraites desdites informations source par une première unité de distribution (3.4) pour la transmission consécutive,
- lesdites deuxièmes informations sont extraites desdites informations source par une deuxième unité de distribution (3.5) pour la transmission consécutive.

22. Procédé selon la revendication 21, **caractérisé en ce que**
- lesdites premières informations audiovisuelles sont fractionnées en lesdites premières informations vidéo et lesdites premières informations audio,
- lesdites premières informations vidéo sont fournies audit premier dispositif de sortie vidéo (4.1) et,
- lesdites premières informations audio sont transmises audit premier dispositif de sortie audio (5.3).

23. Procédé selon l'une quelconque des revendications 16 à 22, **caractérisé en ce que** des informations audio sont fournies à un deuxième dispositif de sortie audio mobile (5.4) par l'intermédiaire d'une connexion au moins partiellement sans fil, en particulier par l'intermédiaire de signaux radioélectriques.

24. Procédé selon la revendication 23, **caractérisé en ce que** lesdits premiers signaux radioélectriques sont adaptés de sorte que lesdites premières informations audio soient produites par ledit premier dispositif de sortie audio (5.3) mais pas par ledit deuxième dispositif de sortie audio (5.4).

25. Procédé selon l'une quelconque des revendications 16 à 24, **caractérisé en ce que** ladite première connexion comprend une connexion radioélectrique analogique et/ou une connexion Wi-Fi®.

26. Procédé selon l'une quelconque des revendications 16 à 25, **caractérisé en ce que** lesdites premières informations audio sont transmises de manière synchronisée par l'intermédiaire de premiers signaux radioélectriques par une pluralité de premières unités de transmission (5.2) qui sont réparties à l'intérieur dudit véhicule (1).
